# EUROPEAN PATENT APPLICATION

(11) **EP 2 280 343 A1**
(43) Date of publication of application: **02.02.2011**
(21) Application number: 09177646.8
(22) Date of filing: 01.12.2009
(51) Int. Cl.: G06F 9/445

(54) **Method and device for application archiving**

(30) Priority: 23.07.2009 US 227902 P
(71) Applicant: RESEARCH IN MOTION LIMITED, Waterloo, Ontario N2L 3W8 (CA)
(72) Inventor: Dumais, Paul Mark Joseph, Kanata Ontario K2K 2A5 (CA)
(74) Representative: Patel, Binesh

(57) **Abstract**

A method, server and system for executing an application on an electronic device is provided. In one example embodiment, the method comprises: receiving an input command from an input mechanism associated with the electronic device; determining whether the input command is a command to execute an archived application, the archived application being stored in a storage memory; if the input command is a command to execute the archived application, automatically installing the archived application to application memory; and automatically executing the installed application after the application is installed to the application memory.

## Description

### CROSS-REFERENCE TO RELATED APPLICATIONS

The present application claims priority to, and the benefit of, U.S. provisional application no. 61/227,902, filed July 23, 2009, the content of this application being incorporated herein by reference.

### TECHNICAL FIELD

The present disclosure relates generally to memory management and, more particularly to methods and devices for archiving applications for use on a mobile electronic device.

### BACKGROUND

Mobile electronic devices typically have limited application memory available for storage. This application memory may be occupied, for example, by data such as service data including information required by the mobile electronic device to establish and maintain communication with a wireless network, user application data such as email messages, address book and contact information, calendar and schedule information, notepad documents, image files, and other commonly stored user information.

The application memory may also have applications stored thereon such as, for example, instant messaging applications, email applications, word processing applications, media player applications, games, etc. Some of these applications may be loaded by the manufacturer of the device or a service provider associated with the device. In other cases, the applications may be loaded onto the device by the user.

Due to the limited amount of memory available, the mobile electronic device may run out of application memory.

### BRIEF DESCRIPTION OF THE DRAWINGS

FIG. 1 is a block diagram illustrating a mobile electronic device in accordance with one embodiment of the present disclosure;

FIG. 2 is a perspective view of the mobile electronic device of FIG. 1 in accordance with example embodiments of the present disclosure;

FIG. 3 is a flowchart illustrating a process for archiving an application in accordance with example embodiments of the present disclosure;

FIG. 4 is an example graphical user interface screen in accordance with example embodiments of the present disclosure;

FIG. 5 is a flowchart illustrating a process for archiving an application in accordance with example embodiments of the present disclosure;

FIG. 6 is a flowchart illustrating a process for archiving an application in accordance with example embodiments of the present disclosure;

FIG. 7 is a flowchart illustrating a process for archiving an application in accordance with example embodiments of the present disclosure;

FIG. 8 is a flowchart illustrating a process for archiving an application in accordance with example embodiments of the present disclosure; and

FIG. 9 is a flowchart illustrating a process for executing an application in accordance with example embodiments of the present disclosure.

Like reference numerals are used in the drawings to denote like elements and features.

### DETAILED DESCRIPTION OF EXAMPLE EMBODIMENTS

In one aspect, the present application provides a method of executing an application on an electronic device, the method comprising: receiving an input command from an input mechanism associated with the electronic device; determining whether the input command is a command to execute an archived application, the archived application being stored in a storage memory; if the input command is a command to execute the archived application, automatically installing the archived application to application memory; and automatically executing the installed application after the application is installed to the application memory.

In another aspect, the present application provides a mobile electronic device. The mobile electronic device includes an application memory and a storage memory interface for interfacing with a storage memory which stores at least one archived application. The mobile electronic device also includes a display screen and an input mechanism. The mobile electronic device includes one or more controllers configured to: i) receive an input command from an input mechanism associated with the electronic device; ii) determine whether the input command is a command to execute an archived application stored in a storage memory; and iii) if the input command is a command to execute the archived application, automatically install the archived application to application memory and automatically execute the installed application after the application is installed to the application memory.

In yet a further aspect, the present application provides a computer program product comprising a computer readable storage medium having encoded thereon computer executable instructions for executing an application on an electronic device. The computer executable instructions include: computer executable instructions for receiving an input command from an input mechanism associated with the electronic device; computer executable instructions for determining whether the input command is a command to execute an archived application, the archived application being stored in a storage memory; computer executable instructions for automatically installing the archived application to application memory if the input command is a command to execute the archived application; and computer executable instructions for automatically executing the installed application after the application is installed to the application memory.

Other aspects of the present application will be apparent to those of ordinary skill in the art from a review of the following detailed description in conjunction with the drawings.

Embodiments of the present application are not limited to any particular operating system, mobile device architecture, server architecture, or computer programming language.

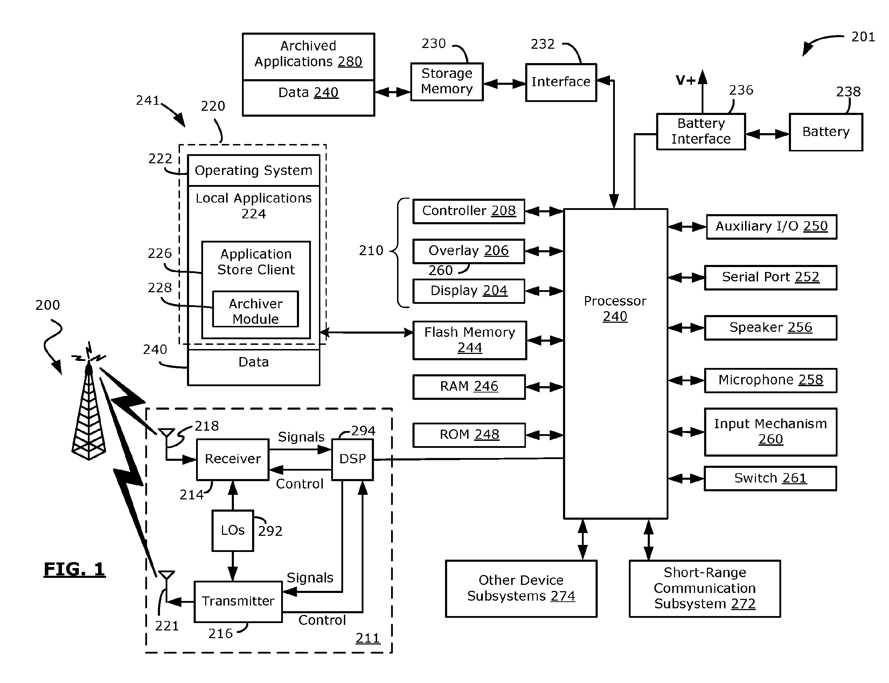

Reference is now made to FIG. 1 which illustrates a mobile electronic device 201 in which example embodiments described in the present disclosure can be applied. In the embodiment shown, the mobile electronic device 201 is a two-way mobile communication device having data and possibly also voice communication capabilities, and the capability to communicate with other computer systems, for example, via the Internet. Depending on the functionality provided by the mobile electronic device 201, in various embodiments the device may be a data communication device, a multiple-mode communication device configured for both data and voice communication, a smartphone, a mobile telephone or a PDA (personal digital assistant) enabled for wireless communication, or a computer system with a wireless modem. It will be appreciated that, in some embodiments, the systems and methods presented herein may be applied to an electronic device that does not, necessarily, have communication capabilities; such as, for example a PDA which is not enabled for communication.

The mobile electronic device 201 includes at least one controller comprising at least one processor 240 such as a microprocessor which controls the overall operation of the mobile electronic device 201, and a wireless communication subsystem 211 for exchanging radio frequency signals with a wireless network 200. The processor 240 interacts with the communication subsystem 211 which performs communication functions. The processor 240 interacts with additional device subsystems. In some embodiments, the device 201 may include a touchscreen display 210 which includes a display (screen) 204, such as a liquid crystal display (LCD) screen, with a touch-sensitive input surface or overlay 206 connected to an electronic controller 208. The touch-sensitive overlay 206 and the electronic controller 208 provide a touch-sensitive input device and the processor 240 interacts with the touch-sensitive overlay 206 via the electronic controller 208. The touch-sensitive overlay 206 acts as an input mechanism 260, allowing the user of the device 201 to input commands to the processor 240. In other embodiments, the display 204 may not be a touchscreen display. Instead, the device 201 may simply include a non-touch display and one or more other input mechanisms 260, such as, for example, a depressible scroll wheel.

The processor 240 interacts with additional device subsystems including flash memory 244, random access memory (RAM) 246, read only memory (ROM) 248, auxiliary input/output (I/O) subsystems 250, data port 252 such as serial data port, such as a Universal Serial Bus (USB) data port, speaker 256, microphone 258, input mechanisms 260, switch 261, short-range communication subsystem 272, and other device subsystems generally designated as 274. Some of the subsystems shown in FIG. 1 perform communication-related functions, whereas other subsystems may provide "resident" or on-device functions.

The communication subsystem 211 includes a receiver 214, a transmitter 216, and associated components, such as one or more antenna elements 218 and 221, local oscillators (LOs) 292, and a processing module such as a digital signal processor (DSP) 294. The antenna elements 218 and 221 may be embedded or internal to the mobile electronic device 201 and a single antenna may be shared by both receiver and transmitter, as is known in the art. As will be apparent to those skilled in the field of communication, the particular design of the communication subsystem 211 depends on the wireless network 200 in which the mobile electronic device 201 is intended to operate.

The mobile electronic device 201 may communicate with any one of a plurality of fixed transceiver base stations of the wireless network 200 within its geographic coverage area. The mobile electronic device 201 may send and receive communication signals over the wireless network 200 after a network registration or activation procedures have been completed. Signals received by the antenna 218 through the wireless network 200 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 294. In a similar manner, signals to be transmitted are processed, including modulation and encoding, for example, by the DSP 294. These DSP-processed signals are input to the transmitter 216 for digital-to-analog (D/A) conversion, frequency up conversion, filtering, amplification, and transmission to the wireless network 200 via the antenna 221. The DSP 294 not only processes communication signals, but may also provides for receiver and transmitter control. For example, the gains applied to communication signals in the receiver 214 and the transmitter 216 may be adaptively controlled through automatic gain control algorithms implemented in the DSP 294.

The processor 240 operates under stored program control and executes software modules 220 stored in an application memory 241 such as persistent memory; for example, in the flash memory 244. As illustrated in FIG. 1, the software modules 220 comprise operating system software 222, local applications 224 which, in some embodiments, may include an application store client 226 for requesting and receiving software applications from an application delivery server (not shown). The application delivery server is a remote server from which the device 201 may purchase and receive applications.

The application store client 226 permits users of the mobile electronic device 201 to connect to the application delivery server through the communication subsystem 211 and to browse or search for applications available for download to their mobile electronic device 201. The application store client 226 permits users to purchase applications for use on their mobile device 201. A user of the mobile electronic device 201 may request an application from the application delivery server by interacting with the application store client 226 on the mobile device 201; for example, by engaging the touchscreen display 210, or other input mechanism 260.

The software modules 220 also include an archiver module 228 for archiving applications to a storage memory 230. As will be explained in greater detail below, the archiver module 228 may be used to archive applications onto a storage memory 230. Archiving applications on the storage memory 230 may be useful to free up application memory 241 on the device 201.

In the embodiment shown, the archiver module 228 is illustrated as being provided by the application store client 226. It will be appreciated that the archiver module 228 may, in other embodiments, be a stand-alone component that is operationally separate from the application store client 226. In further embodiments, the application store module 228 may be provided, in whole or in part, by the operating system software 222 itself. Accordingly, the application store client 226 and the archiver module 228 may, among other things, be implemented through stand-alone software applications, or combined together in one or more of the operating system 222 and other local applications 224.

Those skilled in the art will appreciate that the software modules 220 in the application memory 241 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

The local software applications 224 may also include a range of other applications, including, for example, an address book application, a messaging application, a calendar application, and/or a notepad application. In some embodiments, the local software applications 224 include an email message application, a push content viewing application, a voice communication (i.e. telephony) application, a map application, and/or a media player application. Each of the local software applications 224 may include layout information defining the placement of particular fields and graphic elements (e.g. text fields, input fields, icons, etc.) in the user interface (i.e. the display device 204) according to the application.

In some embodiments, the auxiliary input/output (I/O) subsystems 250 may comprise an external communication link or interface; for example, an Ethernet connection. The mobile electronic device 201 may comprise other wireless communication interfaces for communicating with other types of wireless networks, for example, a wireless network such as an orthogonal frequency division multiplexed (OFDM) network or a GPS transceiver for communicating with a GPS satellite network (not shown). The auxiliary I/O subsystems 250 may comprise a vibrator for providing vibratory notifications in response to various events on the mobile electronic device 201 such as receipt of an electronic communication or incoming phone call, or for other purposes such as haptic feedback (touch feedback).

The mobile electronic device 201 also includes a storage memory 230. The storage memory 230 is a memory component or an area of memory from which the operating system 222 is not configured to run software modules 220 directly. Storage memory 230 differs from application memory 241 by virtue of the fact that the operating system 222 is configured to execute applications 224 directly from the application memory 241 while it cannot execute applications directly from the storage memory 230. Accordingly, the applications stored in the application memory 241 may be referred to as local applications 224 while any applications stored in storage memory 230 may be referred to as archived applications 280. Archived applications 280 are stored on the storage memory 230 but cannot be run directly from the storage memory 230. Archived applications typically cannot be run directly from the storage memory 230 due to software limitations, such as limitations in the operating system 222.

The archived applications 280 may be stored on the storage memory 230 and installed to the application memory 241 in order to run these applications.

The storage memory may, in various embodiments, be comprised of a removable memory card (typically comprising flash memory), such as, for example, a Secure Digital (SD), mini Secure Digital (miniSD), micro Secure Digital (microSD),or CompactFIash™ card. In some embodiments, the storage memory 230 may be comprised of an internal (non-removable) memory which is designated by the operating system as storage memory and not application memory. For example, the storage memory 230 may be e-MMC™ memory. The storage memory 230 is inserted in or connected to a storage memory interface 232 of the mobile electronic device 201.

The storage memory 230 and/or the application memory 241 may also store other data 240. In various embodiments, the other data 240 may include service data including information required by the mobile electronic device 201 to establish and maintain communication with the wireless network 200. The data 240 may also include user application data such as email messages, address book and contact information, calendar and schedule information, notepad documents, image files, and other commonly stored user information stored on the mobile electronic device 201 by its user, and other data.

The serial data port 252 may be used for synchronization with a user's host computer system (not shown). The serial data port 252 may enable a user to set preferences through an external device or software application and extend the capabilities of the mobile electronic device 201 by providing for information or software downloads to the mobile electronic device 201 other than through the wireless network 200. The alternate download path may, for example, be used to load an encryption key onto the mobile electronic device 201 through a direct, reliable and trusted connection to thereby provide secure device communication.

In some embodiments, the mobile electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to the host computer system using standard connectivity protocols. When a user connects their mobile electronic device 201 to the host computer system via a USB cable or Bluetooth® connection, traffic that was destined for the wireless network 200 is automatically routed to the mobile electronic device 201 using the USB cable or Bluetooth® connection. Similarly, any traffic destined for the wireless network 200 is automatically sent over the USB cable Bluetooth® connection to the host computer system for processing.

The mobile electronic device 201 also includes a battery 238 as a power source, which is typically one or more rechargeable batteries that may be charged, for example, through charging circuitry coupled to a battery interface such as the serial data port 252. The battery 238 provides electrical power to at least some of the electrical circuitry in the mobile electronic device 201, and the battery interface 236 provides a mechanical and electrical connection for the battery 238. The battery interface 236 is coupled to a regulator (not shown) which provides power V+ to the circuitry of the mobile electronic device 201.

The short-range communication subsystem 272 is an additional optional component which provides for communication between the mobile electronic device 201 and different systems or devices, which need not necessarily be similar devices. For example, the subsystem 272 may include an infrared device and associated circuits and components, or a wireless bus protocol compliant communication mechanism such as a Bluetooth® communication module to provide for communication with similarly-enabled systems and devices.

A predetermined set of applications that control basic device operations, including data and possibly voice communication applications will normally be installed on the mobile electronic device 201 during or after manufacture. Additional applications and/or upgrades to the operating system 221 or software applications 224 may also be loaded onto the mobile electronic device 201 through the wireless network 200, the auxiliary I/O subsystem 250, the serial port 252, the short-range communication subsystem 272, or other suitable subsystem 274 other wireless communication interfaces. The downloaded programs or code modules may be permanently installed; for example, written into the application memory 241 (i.e. the flash memory 244), or written into and executed from the RAM 246 for execution by the processor 240 at runtime. As will be explained in greater detail below, the applications may be archived to the storage memory 230 and installed to application memory 241 at run-time, before executing the applications. Such flexibility in application installation increases the functionality of the mobile electronic device 201 and may provide enhanced on-device functions, communication-related functions, or both. For example, secure communication applications may enable electronic commerce functions and other such financial transactions to be performed using the mobile electronic device 201.

The mobile electronic device 201 may provide two principal modes of communication: a data communication mode and/or a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email message application and output to the display 242. A user of the mobile electronic device 201 may also compose data items, such as email messages, for example, using the touch-sensitive overlay 206 in conjunction with the display device 204 and possibly the control buttons 260 and/or the auxiliary I/O subsystems 250. These composed items may be transmitted through the communication subsystem 211 over the wireless network 200.

In the voice communication mode, the mobile electronic device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., the voice communication module) and hardware (i.e., the microphone 258, the speaker 256 and input devices). Alternative voice or audio I/O subsystems, such as a voice message recording subsystem, may also be implemented on the mobile electronic device 201. Although voice or audio signal output is typically accomplished primarily through the speaker 256, the display device 204 may also be used to provide an indication of the identity of a calling party, duration of a voice call, or other voice call related information.

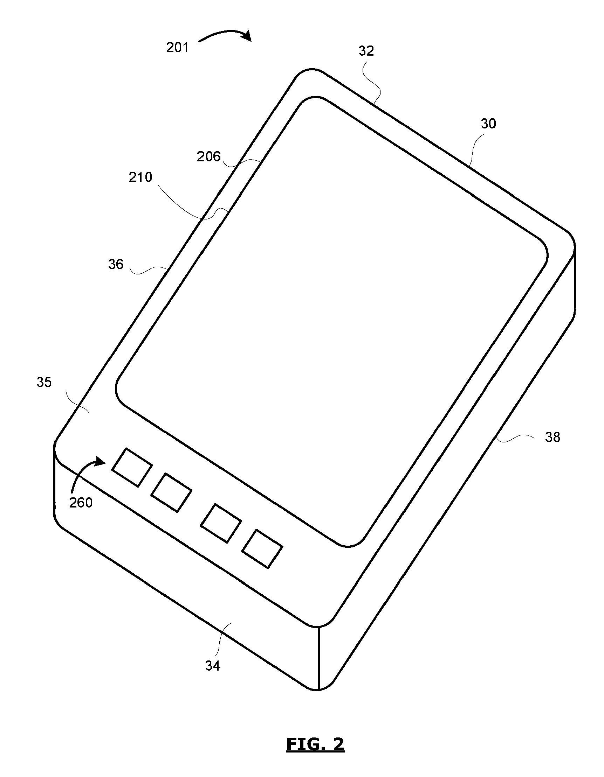

Reference will now be made to FIG. 2 which illustrates an example mobile electronic device 201 in which embodiments of the present disclosure may be applied. The mobile electronic device 201 includes a housing 30 for housing at least some of the components of the device 201 identified in FIG. 1. The housing 30 is configured to be held or cradleable in a user's hand while the mobile electronic device 201 is in use. The touchscreen display 210 is mounted within a front face 35 of the housing 30 so that the housing 30 frames the touchscreen display 210 and exposes a portion of it for user-interaction therewith. In the shown embodiments of FIG. 2, the housing 304 (and device 201) is elongate having a length, defined between top and bottom ends 32, 34, longer than a width, defined between left and right sides 36, 38. Other device dimensions and form factors are also possible.

Referring again to FIG. 1, in some device 201, the operating system 222 is only configured to run local application 224, which are the applications installed to and stored within the application memory 241. The operating system 222 is not configured to run applications stored in other places; such as, for example, the storage memory 230. The application memory 241 may become filled up with local applications 224 and/or data 240. At some point, the application memory 241 may not have enough space to store any further applications. As will be explained in greater detail below, the archiver module 228 may be used to store archived applications 280 to storage memory 230. After archiving, when a user wishes to run one of the archived applications 280, the appropriate archived application 280 is retrieved from the storage memory 230, automatically installed as a local application 224 to the application memory 241 of the device 201, and automatically executed from the application memory 241 following the installation. When the application finishes running (for example, when a user exits the application), the application may be re-archived to the storage memory 230.

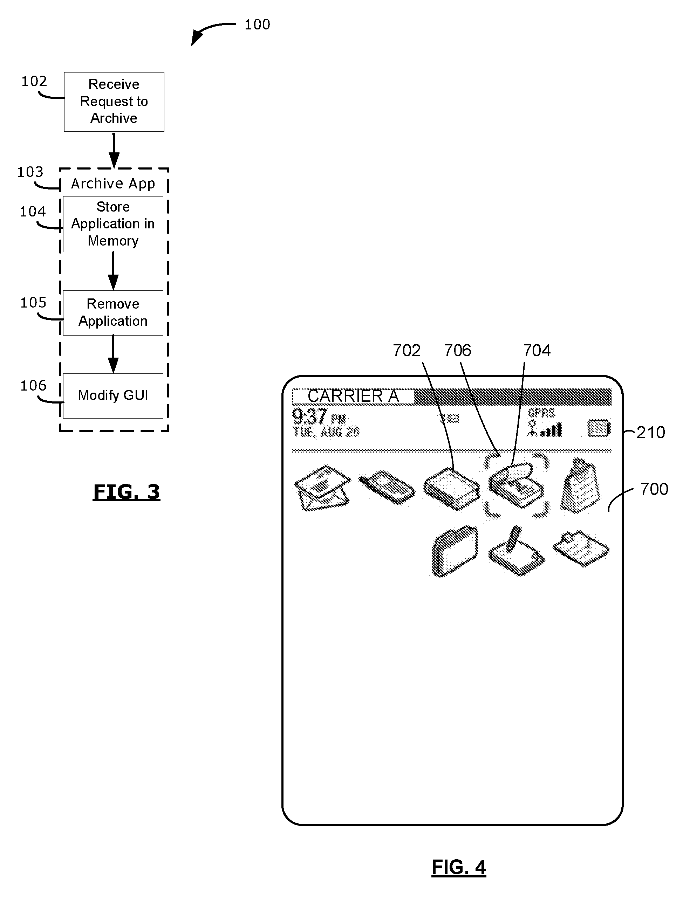

An overview having been provided, reference will now made to the flowcharts of FIGS. 3 and 5 to 9. The mobile electronic device 201 may be configured to perform one or more of the processes 100, 300, 900, 400, 500, 800 illustrated in these flowcharts. More specifically, one or more controller of the device 201 (FIG. 1), such as the processor 240 (FIG. 1), may be configured to execute the steps of any one or more of the processes 100, 300, 900, 400, 500, 800 of FIGs. 3 and 5 to 9. In some embodiments, the archiver module 228 may contain instructions for the processor 240 for executing one or more of the processes 100, 300, 900, 400, 500, 800 of FIGs. 3 and 5 to 9. In the following discussion of the processes of FIGs. 3 and 5 to 8 all reference numerals which relate to device components (as opposed to steps of a process or method), such as processor 240 or application memory 241, refer to device components of FIG. 1.

Referring first to FIG. 3, a process 100 for archiving an application to the storage memory 230 of the mobile electronic device 201 in accordance with one embodiment of the present disclosure is illustrated.

At step 102 a request is received at the processor 240 to archive an application. When a user of the device 201 wishes to archive an application (such as, for example, a local application 224) in the application memory 241, the user may enter a request to archive that application using the input mechanism. The request is received from one or more of the input mechanisms 260 at the processor 240.

In response to receiving a request to archive the application, at step 103, the application associated with the request is archived to the storage memory 230. The step 103 of archiving the application to the storage memory 230 includes a step 104 of storing the application as an archived application 280 in the storage memory 230.

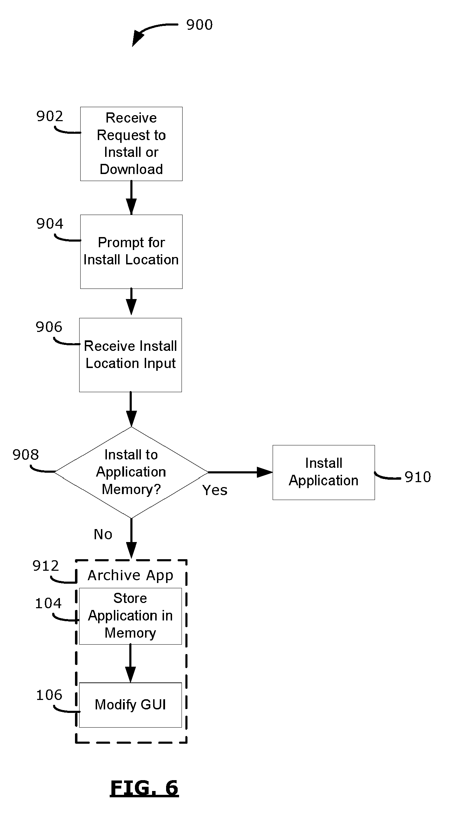

Depending on the specific embodiment, the step 103 of archiving the application may also include a step 105 of removing the corresponding local application 224 from the application memory 241. It will be appreciated that this step 105 need not be included in all embodiments since, in some embodiments, archiving may occur when an application has not been installed to the application memory 241. For example, in one possible scenario that will be discussed below in greater detail with relation to FIGs. 6, 7 and 8, archiving may be performed when a user initiates an installation of an application or a download of an application via the application store client 226 from an application delivery server.

The step 103 of archiving the application to the storage memory 230 may also include a step 106 of modifying a graphical user interface (GUI) screen associated with the device 201 to include a remote application interface element 702.

To better illustrate this step 106 of modifying the GUI screen, reference will now be made to FIG. 4 which illustrates an example graphical user interface screen 700. The graphical user interface screen 700 of FIG. 4 is a home or start screen associated with the operating system 222 (FIG. 1) which permits a user to execute applications. The graphical user interface screen 700 includes at least one local application interface element 704 which is associated with a local application 224 stored in the application memory 241. Interface elements are graphic or text based elements which each provide a link to an associated application. In the shown embodiment, the interface elements 702, 704 are icons in an icon grid array.

The activation of an interface element, such as an icon, using an input mechanism 260 causes the execution of its associated application. The interface elements 702, 704 may be activated, in the embodiment of FIG. 4, by first selecting the appropriate interface element 702, 704 with a cursor or caret 706 and subsequently engaging or activating an appropriate input mechanism 260 to enter the selection.

Where the interface element is a local application interface element 704, the activation of the interface element using the input mechanism 260 causes the associated local application 224 to be executed directly from the application memory 241.

In step 106 of FIG. 3 a remote application interface element 702 may be added to the graphical user interface screen 700. The remote application interface element 700 is associated with the archived application 280. When a user activates the remote application interface element 702, the associated archived application 280 is automatically installed to the application memory 241 and, following its installation, is automatically executed from the application memory 241.

The local application interface element 704 is associated with a local application 224 in the sense that it provides a link to the local application 224 to permit the executing of the local application 224. Similarly, the remote application interface element 702 is associated with the archived application in the sense that it provides a link to the archived application to permit the archived application to be executed. This linking may be effected, at least in part, by an address or other locator identifying the location of an executable file associated with the application.

The graphical user interface screen 700 of FIG. 4 presents both local application interface elements 704 (icons associated with local application 224) and remote application interface elements 702 (icons associated with archived applications 280) in a common icon grid array on a common graphical user interface screen 700. Such a graphical user interface screen 700 provides the user with a consistent experience when executing local applications 224 in the application memory 241 and when executing archived applications 280 in the storage memory 230.

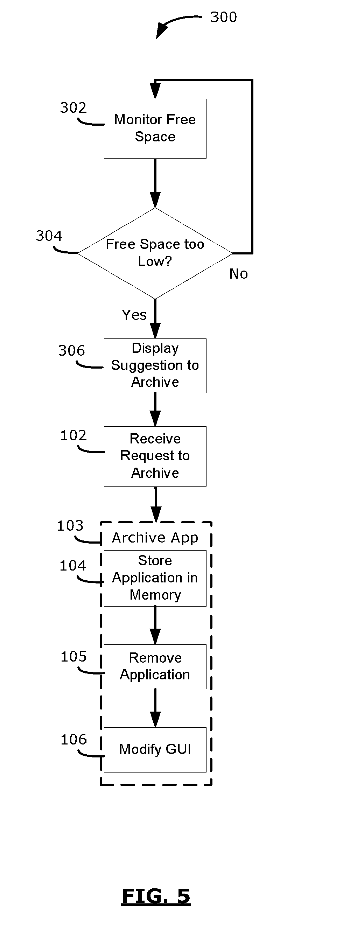

Referring now to FIG. 5, a further process 300 for archiving an application to the storage memory 230 of the mobile electronic device 201 in accordance with one embodiment of the present disclosure is illustrated. In the embodiment of FIG. 5, at step 302 the processor 240 monitors the free space in the application memory 241. Next, at step 304, the processor 240 determines whether the free space in the application memory 241 is too low. The processor 240 may make this determination by comparing the free space with a predetermined threshold. If the free space is less than the predetermined threshold, then the processor 240 may determine that the free space is too low. The predetermined threshold may be an absolute value (i.e. in units of Bytes, Megabytes, Gigabytes, etc.) or may be a percentage of the total size of the application memory 241 (i.e. 10%). At step 306, if the processor 240 determines that the free space in the application memory 241 is too low, (*i.e*., less than the predetermined threshold) the processor 240 may suggest that one or more applications, such as the local applications 241 be archived. The processor 240 may make this suggestion to the user by displaying, on the display screen 210 associated with the device, a message suggesting that applications be archived.

Following this suggestion, a user may request, via the input mechanisms 260 that one or more of the applications be archived. This request is received at step 102, and at step 103 the applications are archived in the manner described above with relation to FIG. 3.

In some instances, the archiving of one or more applications may occur when a user of the device 201 attempts to install an application to the device 201. Alternatively, the archiving may occur in response to the downloading of an application via the application store client 226 from an application delivery server. An example process 900 in which applications are archived during download or installation is illustrated in FIG. 6.

At step 902, a request is received to download or install an application to the device 201. In some embodiments, the request which triggers the operation of the process 900 may be a request to download the application, while in other embodiments the request may be a request to install the application. The request is received from the input mechanism 260 associated with the device 201.

Next, at step 904, the device 201 may prompt the user (for example via the display 210) to input a desired installation location on the device 201 for the application related to the request. The installation location may be, for example, the application memory 241 or the storage memory 230. At step 906, an installation location may be input to the device 201 by the user via the input mechanism 260. That is, a user may make a request to install the application to the application memory 241 or the user may make a request to install the application to the storage memory 230.

Next, at step 908, a determination is made as to whether the request input at step 906 was a request to install the application to the application memory 241 or whether it was a request to install the application to the storage memory 230. If the request was a request to install the application to application memory 241, then at step 910 the application is installed to the application memory 241 (and possibly downloaded if the request at step 902 was a request to download the application).

If the request was a request to install the application to the storage memory 230, at step 912, the application is archived. The step 912 of archiving the application is similar to the step 103 of archiving the application discussed above with reference to FIG. 3, except in that it does not include the step 105 of removing the corresponding local application 224 from the application memory 241, since, in the embodiment of FIG. 6, at the time of archiving the application has not yet been installed to the application memory 241.

The step 912 of archiving includes a step 104 of storing the application in storage memory 230 and a step 106 of modifying the graphical user interface to include a remote interface element. These steps 104, 106 are discussed in greater detail above with relation to FIG. 3.

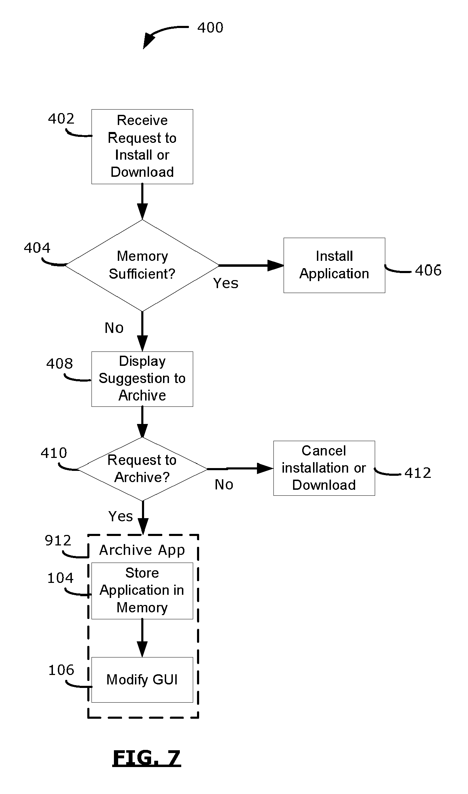

Referring now to FIG. 7, a further process 400 is for archiving an application to the storage memory 230 of the mobile electronic device 201 in accordance with one embodiment of the present disclosure is illustrated.

At step 402, a request is received to download or install an application to the device 201. In some embodiments, the request received at step 402 which triggers the operation of the process 400 may be a request to download the application, while in other embodiments the request may be a request to install the application. The request is received from the input mechanism 260 associated with the device 201.

In response to receiving the request at step 402, a determination is made by the processor 240 as to whether the application memory 241 has enough free space to permit the installation of the application to application memory. If the application memory 241 is sufficient, at step 406, the application is installed to the application memory 241 (and possibly downloaded if the request at step 402 was a request to download the application).

If however, the free space in the application memory 241 is insufficient to permit the installation of the application to the application memory 241, then the processor 240 may cause the display screen 210 to display a message suggesting the application be archived (step 408).

At step 410, if an input is received requesting that the application be archived, the application is archived according to the step 912 of archiving discussed above in relation to FIG. 6. That is, at step 104 the application is stored in the storage memory 230 and at step 106 the GUI is modified to provide a link to the archived application 280 (*i.e*., to include a remote interface element). Alternatively, if such a request is not received, or if a request to cancel the installation or download is received, at step 412 the installation or download may be cancelled.

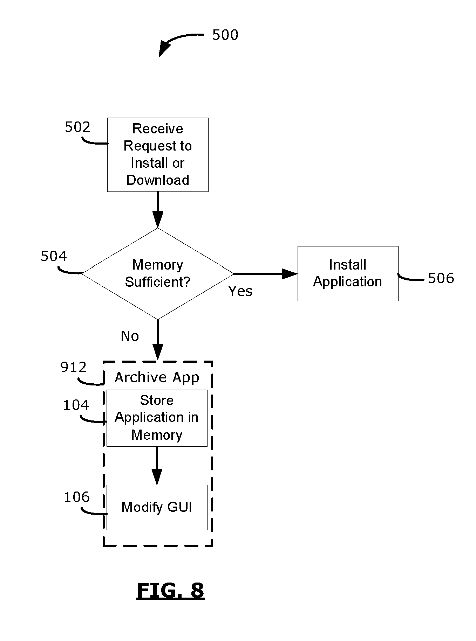

Referring now to FIG. 8, a further process 500 for archiving an application to the storage memory 230 of the mobile electronic device 201 in accordance with one embodiment of the present disclosure is illustrated. In this embodiment, the processor 240 makes a determination as to whether there is sufficient space on the application memory for the installation of an application and, if not, automatically archives the application to the storage memory 230.

At step 502, a request is received to download or install an application to the device 201. In some embodiments, the request received at step 502 which triggers the operation of the process 500 may be a request to download the application, while in other embodiments the request may be a request to install the application. The request is received from the input mechanism 260 associated with the device 201.

In response to receiving the request at step 502, a determination is made (at step 504) by the processor 240 as to whether the application memory 241 has enough free space to permit the installation of the application to application memory 241. The processor 240 may make this determination, for example, by comparing the free space with a threshold, such as a predetermined threshold. If the application memory 241 is sufficient, at step 506, the application is installed to the application memory 241 (and possibly downloaded if the request at step 502 was a request to download the application).

If, however, the application memory 241 does not have sufficient free space, the application is automatically archived at step 912 to the storage memory 230 of the device 201. The step 912 of archiving includes a step 104 of storing the application in storage memory 230 and a step 106 of modifying the graphical user interface to include a remote interface element. These steps 104, 106 are discussed in greater detail above with relation to FIG. 3.

After an application has been archived to the storage memory 230 according to any one of the processes 100, 300, 900, 400, or 500 explained above in relation to FIGs. 3 and 5 to 8, or any suitable variation thereof, local applications 224 or archived applications 280 may then be executed. That is, such applications may be executed when such program execution is requested by a user (*i.e*., via the input mechanism 260) or by another software module.

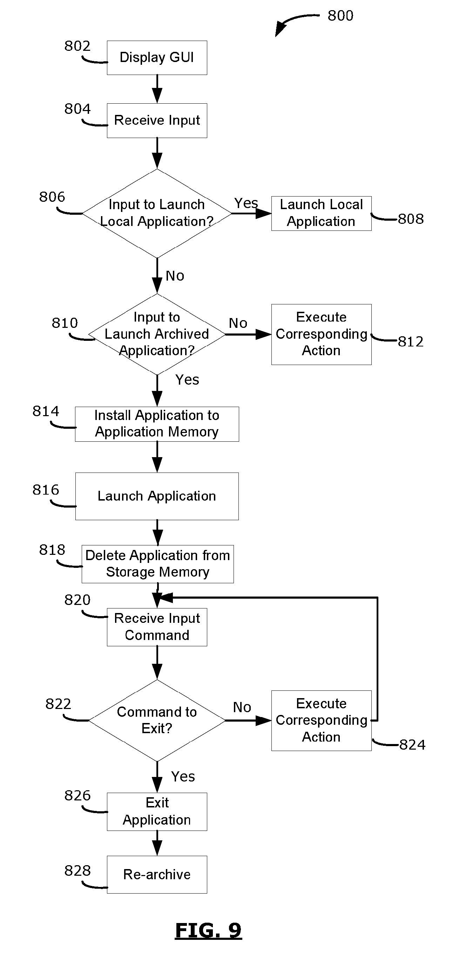

Referring to FIG. 9, a process 800 for executing an application on the mobile electronic device 201 in accordance with one aspect of the present disclosure is illustrated.

At step 802, a graphical user interface screen 700, such as the graphical user interface screen illustrated in FIG. 4, is displayed on the display screen 210 associated with the device 201. The graphical user interface screen 700 includes at least one local application interface element 704 which is associated with a local application 224 stored in the application memory 241. The graphical user interface screen 700 also includes at least one remote application interface element 702 which is associated with an archived application 280 on the storage memory 230. The local application interface element 704 is associated with a local application 224 in the sense that it provides a link to the local application 224 to permit the executing of the local application 224. Similarly, the remote application interface element 702 is associated with the archived application in the sense that it provides a link to the archived application to permit the archived application to be executed. This linking may be effected, at least in part, by an address or other locator identifying the location of an executable file associated with the application.

Next, at step 804 an input command is received from the input mechanism 260 associated with the device 201. At steps 806 and 810, the processor 240 attempts to determine the nature of the input command. At step 806, a determination is made as to whether the input command is a command to execute a local application 224 from application memory 241. If it is such a command, at step 808 the local application 224 is executed directly from the application memory 241.

At step 810, the processor 240 determines whether the input command received at step 804 was a command to execute an archived application 280. If it is not a command to either execute a local application 224 or an archived application 280, then at step 812 an appropriate action which corresponds to the input command is executed. For example, if the input command is a command to open a menu, the desired menu will be opened.

If however, the input command received at step 804 is a command to execute an archived application 280, in response to receiving such an input command, at step 814 the archived application 280 is installed to the application memory 241. In some embodiments, the installation of the archived application 280 to the application memory 241 may include retrieving and/or copying the archived application 280 from the storage memory 230 to the application memory 241.

In some embodiments, during the installation of the archived application 280 to the application memory 241, the processor 240 may be configured to display a progress bar on the display screen 210 to indicate the progress of the installation.

Next, at step 816, in response to the completion of the installation of the application to the application memory 241, the installed application is automatically executed from the application memory 241. That is, the installed application is run or launched from the application memory 241. Executing an application refers to the process of carrying out an instruction defined by the application. The execution of the application is, in at least some embodiments, automatic, without the need for further input from the user of the device 201. Thus, after the user has input a request to execute an archived application at step 804, no further input is required from the user in order to execute that archived application 280. The installation of the archived application 280 to application memory 241 at step 814 and the execution of the application at step 816 each occur automatically without the need for further input from the user.

Next, at step 818, in some embodiments the archived application 280 may be deleted from the storage memory 230. The step 818 of deleting the archived application 280 is optional and may not be included in all embodiments.
In some cases, the archived application 280 is not deleted from the storage memory 230. Such embodiments may be desirable, for example, where it is not possible to re-create the archived application 280 after the application is installed to the application memory 241. For example, in some systems, the archived applications are installation files required to install an application, as opposed to the installed files created after an installation which are required to run the application. After the application has been installed and installed files are created, it may be impossible to create the installation files from the installed files. Accordingly, in such embodiments, the archived files (which are installation files in this example), are not deleted.

In another case, the archived application 280 may not be deleted from the storage memory 230 in order to simplify a later re-archiving process. That is, if the archived application 280 is left intact on the storage memory 230, a re-archiving process which occurs later will not require the application to be copied back to the storage memory 230.

After the application is executed, an input command may be received from the input mechanism 260 at step 820. At step 822 a determination is made as to whether the input command is a command to exit the application. If the input command is not a command to exit the application, at step 824 an action corresponding to the received input is taken.

However, if the input command received at step 820 is a command to exit the application, at step 826 the application is exited.

After the application has exited at step 826, in at least some embodiments, at step 828 the application may be automatically re-archived. Re-archiving the application comprises removing the application from the application memory 241. In some embodiments, where the archived application 280 has been removed from storage memory 230 at step 818, re-archiving also comprises, prior to deleting the application from application memory 241, creating an archived application 280 on the storage memory 230. Creating an archived application 280 on the storage memory may include copying the application from the application memory to the storage memory 230.

In accordance with further embodiments of the present disclosure, there are provided a computer program product comprising a computer readable medium having stored thereon computer executable instructions comprising instructions for practising the methods of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

While the present disclosure is primarily described as a method, a person of ordinary skill in the art will understand that the present disclosure is also directed to various apparatus such as a mobile electronic device for carrying out at least some of the aspects and features of the described methods and including components for performing at least some of the described method steps, be it by way of hardware components, a computer programmed by appropriate software to enable the practice of the disclosed method, by any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the disclosed method. It is understood that such apparatus, articles of manufacture, and computer data signals also come within the scope of the present disclosure.

The embodiments of the present disclosure described above are intended to be examples only. Those of skill in the art may effect alterations, modifications and variations to the particular embodiments without departing from the intended scope of the present disclosure. In particular, features from one or more of the above-described embodiments may be selected to create alternate embodiments comprised of a sub-combination of features which may not be explicitly described above. In addition, features from one or more of the above-described embodiments may be selected and combined to create alternate embodiments comprised of a combination of features which may not be explicitly described above. Features suitable for such combinations and sub-combinations would be readily apparent to persons skilled in the art upon review of the present disclosure as a whole. The subject matter described herein and in the recited claims intends to cover and embrace all suitable changes in technology.

## Claims

1. A method of executing an application on an electronic device, the method comprising:
receiving an input command from an input mechanism (260) associated with the electronic device;
determining whether the input command is a command to execute an archived application (280), the archived application (280) being stored in a storage memory (230);
if the input command is a command to execute the archived application (280), automatically installing the archived application (280) to application memory (241); and
automatically executing the installed application after the application is installed to the application memory (241).

2. The method of claim 1, further comprising,
prior to receiving the input command to execute the archived application, displaying a graphical user interface screen on a display screen (204) associated with the device, the graphical user interface screen including at least one local application interface element associated with a local application (224) stored in the application memory (241) and at least one remote application interface element associated with the archived application (280) stored in the storage memory (230);
after receiving the input command, determining whether the input command is a command to execute the local application (224) and if so, executing the associated application directly from an application memory (241).

3. The method of any one of claims 1 or 2, further comprising:
after executing the installed application, receiving an input command from the input mechanism (260) associated with the device to exit the application; and
in response to receiving the input command to exit the application, exiting the application and removing the application from the application memory (241).

4. The method of any one of claims 1 to 3 wherein installing the application comprises copying an application file to the application memory (241).

5. The method of claim 2 further comprising, prior to displaying the graphical user interface screen on the display screen (204):
receiving a request to archive an application; and
in response to receiving the request to archive the application, storing an application in the storage memory (230) and modifying the graphical user interface screen to include the remote application interface element.

6. The method of claim 5, further comprising, prior to receiving the request to archive the application:
monitoring free space in the application memory (241); and
displaying, on the display screen (204), a suggestion to archive applications if the amount of free space in the application memory (241) falls below a predetermined threshold.

7. The method of any one of claims 1 to 6, wherein the storage memory (230) is removable memory.

8. The method of claim 5, further comprising, prior to receiving the request to archive the application:
receiving a request to install the application;
determining if the amount of application memory (241) is sufficient for installation of the application to application memory; and
if the amount of application memory (241) is not sufficient, suggesting the application be archived.

9. The method of claim 2, further comprising, prior to displaying the graphical user interface screen on the device:
determining if the amount of application memory (241) is sufficient for installation of the application to application memory (241); and
if the amount of application memory (241) is not sufficient, automatically archiving the application,
wherein automatically archiving the application comprises: storing an application file in the storage memory (230), and modifying the graphical user interface screen to include the remote application interface element, and associating the remote application interface element with the application having the application file in the storage memory (230).

10. The method of claim 9, further comprising, prior to determining if the amount of application memory is sufficient:
receiving a request to download the application from an application server.

11. The method of claim 2, wherein the remote application interface element and the local application interface element are icons.

12. A mobile electronic device comprising:
an application memory (241);
a storage memory interface (232) for interfacing with a storage memory (230) which stores at least one archived application (280);
a display screen (204);
an input mechanism (260); and
one or more controllers configured to perform the method of any one of claims 1 to 11.

13. A computer program product comprising a computer readable storage medium having encoded thereon computer executable instructions for performing the method of any one of claims 1 to 11.

## Amended claims

### Amended claims in accordance with Rule 137(2) EPC.

**1.** A method of executing an application on an electronic device, the method comprising:
displaying a graphical user interface screen on a display screen (204) associated with the device, the graphical user interface screen including at least one local application interface element associated with a local application (224) stored in the application memory (241) and at least one remote application interface element associated with an archived application (280) stored in a storage memory (230);
receiving an input command from an input mechanism (260) associated with the electronic device;
determining whether the input command is a command to execute the local application (224) and if so, executing the associated application directly from the application memory (241);
determining whether the input command is a command to execute the archived application (280); and
if the input command is a command to execute the archived application (280), automatically installing the archived application (280) to the application memory (241), and automatically executing the installed application after the application is installed to the application memory (241).

**2.** The method of claim 1, further comprising:
after executing the installed application, receiving an input command from the input mechanism (260) associated with the device to exit the application; and
in response to receiving the input command to exit the application, exiting the application and removing the application from the application memory (241).

**3.** The method of any one of claims 1 to 2 wherein installing the application comprises copying an application file to the application memory (241).

**4.** The method of claim 1 further comprising, prior to displaying the
graphical user interface screen on the display screen (204):
receiving a request to archive an application; and
in response to receiving the request to archive the application, storing an application in the storage memory (230) and modifying the graphical user interface screen to include the remote application interface element.

**5.** The method of claim 4, further comprising, prior to receiving the request to archive the application:
monitoring free space in the application memory (241); and
displaying, on the display screen (204), a suggestion to archive applications if the amount of free space in the application memory (241) falls below a predetermined threshold.

**6.** The method of any one of claims 1 to 5, wherein the storage memory (230) is removable memory.

**7.** The method of claim 6, further comprising, prior to receiving the request to archive the application:
receiving a request to install the application;
determining if the amount of application memory (241) is sufficient for installation of the application to application memory; and
if the amount of application memory (241) is not sufficient, suggesting the application be archived.

**8.** The method of claim 1, further comprising, prior to displaying the graphical user interface screen on the device:
determining if the amount of application memory (241) is sufficient for installation of the application to application memory (241); and
if the amount of application memory (241) is not sufficient, automatically archiving the application,
wherein automatically archiving the application comprises: storing an application file in the storage memory (230), and modifying the graphical user interface screen to include the remote application interface element, and associating the remote application interface element with the application having the application file in the storage memory (230).

**9.** The method of claim 8, further comprising, prior to determining if the amount of application memory is sufficient:
receiving a request to download the application from an application server.

**10.** The method of claim 1, wherein the remote application interface element and the local application interface element are icons.

**11.** A mobile electronic device comprising:
an application memory (241);
a storage memory interface (232) for interfacing with a storage memory (230) which stores at least one archived application (280);
a display screen (204);
an input mechanism (260); and
one or more controllers configured to perform the method of any one of claims 1 to 10.

**12.** A computer program product comprising a computer readable storage medium having encoded thereon computer executable instructions for performing the method of any one of claims 1 to 10.
